# DEMANDE DE BREVET EUROPEEN

(11) **EP 0 722 863 A1**
(43) Date de publication de la demande: **24.07.1996**
(21) Numéro de dépôt: 96400047.5
(22) Date de dépôt: 08.01.1996
(51) Int. Cl.: B60R 21/20

(54) **Procédé de fabrication d'une pièce d'équipement, notamment pour véhicule automobile et pièce obtenue selon ce procédé**

(30) Priorité: 18.01.1995 FR 9500535
(71) Demandeur: ECIA - EQUIPEMENTS ET COMPOSANTS POUR L'INDUSTRIE AUTOMOBILE, F-25400 Audincourt (FR)
(72) Inventeur: Heranney, Yves, F-25200 Montbeliard (FR); Goisset, Bernard, F-25310 Blamont (FR)
(74) Mandataire: Habasque, Etienne Joel Jean-François

(57) **Abrégé**

Ce procédé de fabrication d'une pièce d'équipement comprenant une armature (1) munie d'une coupelle ouverte (2) de réception d'un sac gonflable à l'état plié et d'un garnissage (5), est caractérisé en ce qu'il comporte les étapes suivantes :
- on dispose au moins le sac gonflable (3) à l'état plié dans la coupelle (2);
- on obture l'ouverture de la coupelle (2) à l'aide d'un couvercle rigide (4) comprenant au moins un volet articulé sur la coupelle et escamotable lors du gonflage du sac;
- on dispose l'armature avec sa coupelle (2) munie du sac (3) et du couvercle (4) dans un moule de fabrication du garnissage par injection de matière plastique, et
- on injecte de la matière plastique dans le moule pour former le garnissage (5).

## Description

La présente invention concerne un procédé de fabrication d'une pièce d'équipement, notamment pour véhicule automobile et une pièce d'équipement obtenue selon ce procédé.

Plus particulièrement, l'invention se rapporte aux procédés de fabrication des pièces d'équipement de véhicules, qui comprennent au moins un sac gonflable, telles que par exemple des pièces d'équipement disposées au niveau des planches de bord des véhicules ou des volants de direction de ceux-ci.

Les procédés de fabrication de ce type de pièces d'équipement, connus dans l'état de la technique, consistent essentiellement à monter la pièce d'équipement sur le véhicule, à disposer le sac gonflable dans une coupelle de l'armature de cette pièce, puis à fixer sur cette armature, un garnissage qui a été réalisé indépendamment du reste de la pièce.

Ceci est le cas par exemple des coussins centraux des volants de direction des véhicules pour lesquels les différentes opérations de montage sont réalisées chez les constructeurs de véhicules.

On conçoit que ces différentes opérations de montage nécessitent l'assemblage des différents éléments de cette pièce les uns à la suite des autres et que ces opérations présentent un certain nombre d'inconvénients, notamment au niveau du temps requis pour cet assemblage et de la présence d'organes de fixation tels que des rivets ou autres pour la fixation de ces éléments sur le reste de l'armature de la pièce.

On a également décrit dans les demandes de brevets Français n° 93 14 120 et 93 14 121 déposées le 25 novembre 1993, au nom de la Demanderesse, des procédés de fabrication d'une pièce d'équipement, et notamment d'un volant de direction de véhicule automobile, comprenant une armature munie d'une coupelle ouverte de réception d'un sac gonflable à l'état plié et d'un garnissage, qui comportent les étapes suivantes :
- on dispose au moins le sac gonflable à l'état plié dans la coupelle;
- on obture l'ouverture de la coupelle à l'aide d'un matériau d'étanchéité déchirable lors du gonflage du sac;
- on dispose l'armature avec sa coupelle munie du sac et du matériau d'étanchéité dans un moule de fabrication du garnissage par injection de matière plastique; et
- on injecte de la matière plastique dans le moule pour former le garnissage.

Cependant, il a été constaté que l'utilisation du matériau d'étanchéité d'obturation de l'ouverture de la coupelle présentait des inconvénients lors de l'injection de matière plastique dans le moule pour former le garnissage.

Il se forme en effet des surépaisseurs de matière plastique au niveau de l'ouverture de la coupelle, ces surépaisseurs étant gênantes pour le déploiement du sac.

Le but de l'invention est donc de résoudre ces problèmes.

A cet effet, l'invention a pour objet un procédé de fabrication d'une pièce d'équipement, notamment pour véhicule automobile, comprenant une armature munie d'une coupelle ouverte de réception d'un sac gonflable à l'état plié et d'un garnissage, caractérisé en ce qu'il comporte les étapes suivantes:
- on dispose au moins le sac gonflable à l'état plié dans la coupelle;
- on obture l'ouverture de la coupelle à l'aide d'un couvercle rigide comprenant au moins un volet articulé sur la coupelle et escamotable lors du gonflage du sac;
- on dispose l'armature avec sa coupelle munie du sac et du couvercle dans un moule de fabrication du garnissage par injection de matière plastique; et
- on injecte de la matière plastique dans le moule pour former le garnissage.

Selon un autre aspect, l'invention a également pour objet une pièce d'équipement de véhicule automobile.

L'invention sera mieux comprise à la lecture de la description qui va suivre, donnée uniquement à titre d'exemple et faite en se référant aux dessins annexés, sur lesquels :

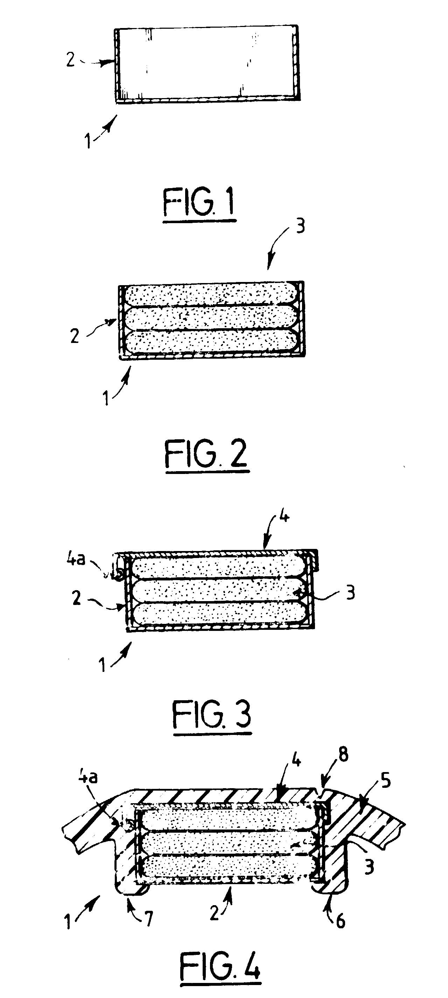

- les Fig.1 à 4 illustrent les différentes étapes d'un procédé de fabrication d'une pièce d'équipement telle qu'un volant de direction de véhicule automobile, selon l'invention.

Ainsi qu'on peut le voir sur ces figures, une pièce d'équipement de véhicule automobile comporte une armature de pièce destinée à recevoir au moins un sac gonflable dans une coupelle ouverte de réception de ce sac à l'état plié, et peut être adaptée pour former par exemple un volant de direction d'un véhicule ou encore une pièce d'équipement destinée à être intégrée dans la planche de bord du véhicule, par exemple en regard du passager avant de celui-ci.

L'armature de cette pièce d'équipement, désignée de façon générale par la référence 1 sur la figure 1, comporte une coupelle ouverte 2 de réception du sac gonflable à l'état plié et suivant le procédé selon l'invention, tel qu'illustré sur ces figures 1 à 4, la première étape de ce procédé consiste à disposer au moins le sac gonflable désigné par la référence générale 3 sur la figure 2 dans la coupelle 2 de l'armature 1.

On notera à cet égard qu'un générateur de gaz peut également être disposé dans cette coupelle, de façon classique, ce générateur de gaz étant relié au reste des circuits de contrôle/commande du véhicule par l'intermédiaire par exemple de moyens de connexion électriques.

Cependant, il est connu dans l'état de la technique que le générateur de gaz peut également être disposé dans un autre organe du véhicule, tel que par exemple l'arbre de direction dans le cas où la pièce d'équipement est un volant de direction ou encore dans une poutre de renfort de la planche de bord dans le cas où la pièce d'équipement est disposée dans la planche de bord du véhicule en regard du passager avant.

Une fois que ce sac gonflable et éventuellement le générateur de gaz sont disposés dans la coupelle 2, on obture l'ouverture de cette coupelle à l'aide d'un couvercle 4 escamotable lors du gonflage du sac, comme cela est illustré sur la Fig.3.

Ce couvercle 4 est rigide et comprend au moins un volet articulé sur la coupelle et escamotable lors du gonflage du sac.

Différents modes de réalisation des moyens d'articulation 4a de ce volet sur la coupelle peuvent être envisagés.

Ensuite, on dispose l'armature de pièce avec sa coupelle munie du sac gonflable 3 et du couvercle 4 dans un moule de fabrication du garnissage de la pièce d'équipement par injection de matière plastique et on injecte de la matière plastique dans le moule pour former le garnissage désigné par la référence générale 5 sur la Fig.4.

Le moule de fabrication peut être conçu pour former des pattes d'accrochage 6 et 7 du garnissage sur l'armature 2 pour obtenir une bonne liaison entre le garnissage et celle-ci.

Bien entendu, le moule peut également être adapté pour former des zones de rupture préférentielle 8 de ce garnissage, en regard de l'ouverture de la coupelle, ces zones se déchirant lors du gonflage du sac comme cela est classique.

On conçoit alors que ce procédé de fabrication permet d'obtenir une pièce d'équipement munie d'un garnissage en matière plastique, qui peut être fixée directement sur un autre organe du véhicule et qui est livrée chez les constructeurs de véhicules à l'état assemblé, ce qui permet de résoudre les problèmes de montage mentionnés précédemment.

Le couvercle 4 articulé sur la coupelle de cette pièce d'équipement peut par exemple être réalisé en aluminium ou en magnésium comme le reste de l'armature de cette pièce.

Ce couvercle rigide permet d'empêcher la formation de surépaisseurs au niveau de l'ouverture de la coupelle.

Il va de soi bien entendu que ce couvercle peut également comporter plusieurs volets d'obturation de l'ouverture de la coupelle, articulés indépendamment l'un de l'autre sur celle-ci.

C'est ainsi par exemple que ce couvercle peut comporter deux volets en regard l'un de l'autre et articulés sur des bords opposés de la coupelle.

## Revendications

1. Procédé de fabrication d'une pièce d'équipement, notamment pour véhicule automobile, comprenant une armature (1) munie d'une coupelle ouverte (2) de réception d'un sac gonflable (3) à l'état plié et d'un garnissage (5), caractérisé en ce qu'il comporte les étapes suivantes:
- on dispose au moins le sac gonflable (3) à l'état plié dans la coupelle (2);
- on obture l'ouverture de la coupelle (2) à l'aide d'un couvercle rigide (4) comprenant au moins un volet articulé sur la coupelle et escamotable lors du gonflage du sac;
- on dispose l'armature avec sa coupelle (2) munie du sac (3) et du couvercle (4) dans un moule de fabrication du garnissage par injection de matière plastique; et
- on injecte de la matière plastique dans le moule pour former le garnissage (5).

2. Procédé selon la revendication 1, caractérisé en ce que le couvercle est en aluminium.

3. Procédé selon la revendication 1, caractérisé en ce que le couvercle est en magnésium.

4. Pièce d'équipement de véhicule automobile, caractérisée en ce qu'elle est obtenue suivant le procédé selon l'une quelconque des revendications précédentes.
